# EUROPÄISCHE PATENTSCHRIFT

(11) **EP 3 039 285 B1**
(45) Veröffentlichungstag und Bekanntmachung des Hinweises auf die Patenterteilung: **13.05.2020**
(21) Anmeldenummer: 14747364.9
(22) Anmeldetag: 01.08.2014
(51) Int. Cl.: B32B 25/10, B32B 25/16, F03D 1/06, B32B 25/08, B32B 27/32

(54) **ROTORBLATTELEMENT FÜR EINE WINDENERGIEANLAGE, ROTORBLATT, SOWIE EIN HERSTELLUNGSVERFAHREN DAFÜR UND WINDENERGIEANLAGE MIT ROTORBLATT**
ROTOR BLADE ELEMENT FOR A WIND TURBINE, ROTOR BLADE AND A PRODUCTION PROCESS THEREFOR AND WIND TURBINE WITH ROTOR BLADE
ÉLÉMENT DE PALE DE ROTOR D'ÉOLIENNE, PALE DE ROTOR, AINSI QUE PROCÉDÉ DE FABRICATION CORRESPONDANT ET ÉOLIENNE ÉQUIPÉE D'UNE PALE DE ROTOR

(30) Priorität: 28.08.2013 DE 102013217128
(43) Veröffentlichungstag der Anmeldung: 06.07.2016
(73) Patentinhaber: Wobben Properties GmbH, 26607 Aurich (DE)
(72) Erfinder: THEILE, Benjamin, 26122 Oldenburg (DE); HOFFMANN, Alexander, 26721 Emden (DE)
(74) Vertreter: Eisenführ Speiser
(86) Internationale Anmeldenummer: PCT/EP2014/066582
(87) Internationale Veröffentlichungsnummer: WO 2015/028250

(56) Entgegenhaltungen:
- WO-A2-2010/118860
- US-A1- 2012 034 833

## Beschreibung

Die vorliegende Erfindung betrifft ein Rotorblattelement für eine Windenergieanlage, ein Rotorblatt, sowie ein Herstellungsverfahren für das Rotorblattelement bzw. das Rotorblatt. Darüber hinaus betrifft die Erfindung eine Windenergieanlage.

Rotorblätter für Windenergieanlagen sind seit langem bekannt und beispielsweise beschrieben in der DE 10 2004 007 487 A1 und DE 103 19 246 A1. Sie sind in ihrem Betrieb durch Winddruck, Erosion, Temperaturschwankungen, UV-Einstrahlung sowie durch Niederschläge hohen Belastungen ausgesetzt. Bei Blattspitzengeschwindigkeiten bis zu 300 km/h wirken Sandkörner, Salzpartikel, Insekten oder andere Schwebeteile in der Luft abrasiv. Dies belastet die Oberfläche von Rotorblättern, insbesondere im vorderen Kantenbereich. An diesen Stellen kommt es zu einem Abtrag der Rotoroberfläche und damit zu einem Verlust an Aerodynamik und Stabilität.

Gleichzeitig sollen die Rotorblätter jedoch möglichst leicht sein, um die auf einer allfällig vorhandenen Rotorblattnarbe sowie die zugehörigen Lager und den Turm der Windenergieanlage einwirkenden Biegelasten gering zu halten. Es hat sich als zweckmäßig erwiesen, Rotorblätter aus einzelnen Elementen herzustellen und diese Elemente zu einem hohlkammerartigen Rotorblatt miteinander zu verbinden. Als Rotorblattelemente werden üblicherweise eine Rotorblattdruckseite, eine Rotorblattsaugseite und ein oder mehrere Verbindungsstege zum Verbinden und Versteifen der Rotorblattdruck und -saugseite eingesetzt. Ebenfalls bewährt hat es sich, die Rotorblattdruck und -saugseite einstückig herzustellen und bei dieser Herstellung bereits Stege an ihren benötigten Stellen anzuordnen.

Üblicherweise werden Rotorblätter und Rotorblattelemente in einem Formungsverfahren hergestellt, bei dem Fasermaterialien und/oder Kernwerkstoffe, insbesondere Balsaholz, in eine Rotorblattelement-Form eingelegt und mit einem aushärtenden Harz zum Bilden eines belastbaren Verbundmaterials beaufschlagt werden. Als Harz werden bei der Herstellung von Rotorblättern bzw. Rotorblattelementen häufig Epoxidharze eingesetzt. Diese sind gut geeignet für den Aufbau der Basis eines Rotorblattes oder Rotorblattelementes aus Fasermaterial und härtbarem Harz. Der Fachmann versteht den Begriff "härtbares Harz" im Zusammenhang mit der vorliegenden Erfindung als Angabe einer grundsätzlichen Eigenschaft des Harzes und nicht als im Rotorblatt bzw. Rotorblattelement tatsächlich noch vorhandene Materialeigenschaft.

Zum Schutz der Rotorblätter bzw. der Rotorblattelemente gegen Witterungseinflüsse und insbesondere gegen Erosion ist versucht worden, eine Oberflächenschicht mit einem Gelcoat-Verfahren wie in der DE 10 3 44 379 A1 beschrieben, einzusetzen. Nachteilig dabei ist, dass bei einem solchen Verfahren eine entsprechende Verarbeitungszeit eingehalten werden muss, bis die Gelcoat-Mischung soweit ausreagiert ist, dass sie mit Fasermaterial belegt werden kann. Dies führt zu einer unerwünschten Verlangsamung des Herstellungsverfahrens eines Rotorblattes oder Rotorblattelementes. Darüber hinaus ist es nicht möglich beim Gelcoat-Verfahren, die Herstellung eines Rotorblattelementes bzw. Rotorblattes beliebig zu unterbrechen, um eine Verbindung zwischen Gelcoat-Oberflächenschicht und Infusionsharz zu ermöglichen. Des Weiteren ist versucht worden, Oberflächenfolien auf das Rotorblatt oder das Rotorblattelement aufzukleben oder anderweitig nachträglich am Rotorblatt oder Rotorblattelement gegebenenfalls lösbar zu befestigen. Beispielsweise werden Polyurethan-Folien auf Rotorblätter aufgeklebt. Eine weitere Möglichkeit aus dem Stand der Technik ist gemäß DE 10 2009 002 501 A1 die Herstellung eines vernetzten Verbundes aus Oberflächenfolie und Infusionsharz. Auch dieses Verfahren ist insbesondere mit Polyurethan-Folien möglich. Polyurethan verfügt über eine hohe Abriebbeständigkeit. Es ist jedoch wünschenswert, die Abriebfestigkeit von Rotorblättern bzw. Rotorblattelementen zu verbessern.

Das Deutsche Patent- und Markenamt hat in der Prioritätsanmeldung folgenden Stand der Technik recherchiert: DE 10 2011 004 723 A1, US 2010/0032948 A1, EP 2 416 950 B1, WO 2013/045087 A1.

Des Weiteren ist aus US 2012/034833 A1 ein Rotorblattelement bekannt, das als ein Kunststoffverbundteil(a) eine Kunststoff-Trägerschicht aufweisend ein Fasermaterial getränkt mit härtbarem Harz, (b) eine Kunststoff-Außenschicht aufweisend Polyethylen mit ultrahohem Molekulargewicht (UHMWPE), und (c) eine zwischen Kunststoff-Trägerschicht und Kunststoff-Außenschicht angeordnete Elastomer- oder Gummischicht, die eine oder mehrere Gummi-Schichten aufweist, umfasst.

An dieser Stelle setzt die Erfindung an, deren Aufgabe es ist, ein Rotorblattelement, ein Rotorblatt und eine Windenergieanlage anzugeben, die hinsichtlich des Standes der Technik verbessert sind. Zumindest soll eine alternative Lösung zu einer im Stand der Technik bekannten Lösung vorgeschlagen werden.

Diese Aufgabe wird hinsichtlich einer Vorrichtung gelöst durch ein Rotorblattelement des Anspruchs 1. Ein Rotorblattelement für eine Windenergieanlage gemäß der Erfindung hat eine Basis, aufweisend ein Fasermaterial getränkt mit härtbarem Harz und eine Oberflächenfolie sowie eine zwischen Basis und Oberflächenfolie angeordnete Anbindungsschicht. Dabei weist die Oberflächenfolie Polyethylen mit ultrahohem Molekulargewicht (UHMWPE) auf und die Anbindungsschicht weist eine erste Gummi-Schicht, die der Oberflächenfolie zugeordnet ist, und eine zweite Gummi-Schicht, die der Basis zugeordnet ist, auf.

Der Erfindung liegt die Erkenntnis zugrunde, dass mit dem Einsatz von Oberflächenfolien aufweisend UHMWPE eine deutliche Verbesserung der Abriebfestigkeit von Rotorblattelementen möglich ist. Darüberhinaus schließt die Erfindung die Erkenntnis ein, dass die Aufbringung und dauerhafte Verbindung von UHMWPE auf einer Basis eines Rotorblattelementes aus Fasermaterial und härtbarem Harz, insbesondere Epoxidharz, vorteilhaft über eine Anbindungsschicht, aufweisend zwei Gummi-Schichten möglich ist. UHMWPE zeichnet sich durch sehr gute Verschleiß- und Abriebfestigkeiten auch bei abrasiven Medien aus, seine Abriebfestigkeit ist sechsfach höher als die von Polyurethan. Daneben verfügt UHMWPE über exzellente chemische Beständigkeit sowie einen niedrigen Reibungskoeffizienten, eine hervorragende Dimensionsstabilität und eine hohe Schlagfestigkeit auch bei niedrigen Temperaturen. Diese Eigenschaften machen UHMWPE besonders interessant für den Einsatz als Oberflächenfolie zum Schutz vor Erosion, allerdings lässt sich UHMWPE mit herkömmlichen Klebstoffen nur sehr schlecht anbinden. Insbesondere Epoxidharze sind nicht für eine direkte Anbindung auf Polyethylen, insbesondere UHMWPE geeignet. Der Erfindung liegt jedoch die Erkenntnis zugrunde, dass es möglich ist, UHMWPE-Folien mittels einer Anbindungsschicht aus zwei Gummi-Schichten auch auf Rotorblattelemente bzw. Rotorblätter auf Epoxidharzbasis aufzubringen und so die Abriebfestigkeit der Rotorblattelemente bzw. Rotorblätter zu verbessern.

Unter Vulkanisierung wird im Rahmen dieser Anmeldung jede Vernetzungsreaktion der Polymere verstanden, die in der ersten und/oder der zweiten Gummi-Schicht enthalten sind. Unter einem Gummi wird im Rahmen dieser Anmeldung ein vulkanisierter, also vernetzter Kautschuk, anders ausgedrückt ein polymerisierter Kautschuk, verstanden.

Das Konzept der Erfindung kommt allgemein bei einem Rotorblattelement zum Tragen, auch unabhängig von einem Herstellungsverfahren. Es hat sich jedoch besonders ein Rotorblattelement als vorteilhaft erwiesen, das mit einem Herstellungsverfahren nach Anspruch 9 gemäß dem Konzept der Erfindung hergestellt ist. Grundsätzlich können jedoch auch andere Verfahren zur Herstellung genutzt werden als das beanspruchte Herstellungsverfahren. Das Herstellungsverfahren gemäß dem Konzept der Erfindung umfasst folgende Schritte:
a) Bereitstellen einer Oberflächenfolie aufweisend UHMWPE
b) Herstellen eines Verbundes durch Aufbringen einer Kautschukschicht auf einer Seite der Oberflächenfolie
c) Vulkanisieren der Kautschukschicht zu einer ersten Gummi-Schicht
d) Bereitstellen eines Fasermaterials
e) Herstellen einer Basis durch Tränken des Fasermaterials mit einem härtbaren Harz
f) Härtung des härtbaren Harzes
g) Aufbringen einer zweiten Kautschukschicht auf der Basis und/oder auf dem Verbund
h) Aufbringen des Verbundes auf die Basis, derart, dass die zweite Kautschukschicht sich zwischen Basis und Verbund befindet
i) Vulkanisieren der zweiten Kautschukschicht zu einer zweiten Gummi-Schicht, wobei
   - das Vulkanisieren der ersten Kautschukschicht bei höheren Temperaturen und/oder höheren Drücken stattfindet als das Vulkanisieren der zweiten Kautschukschicht, und ein Vulkanisierungsgrad der ersten Gummi-Schicht höher ist als ein Vulkanisierungsgrad der zweiten Gummi-Schicht.

Das Konzept der Erfindung führt auch auf ein Rotorblatt des Anspruchs 1 sowie auf eine Windenergieanlage des Anspruchs 8.

Nachfolgend werden Weiterbildungen des erfindungsgemäßen Rotorblattelementes beschrieben.

Bevorzugt ist das Rotorblattelement hergestellt nach einem Herstellverfahren gemäß dem Konzept der Erfindung.

Bevorzugt wurden die erste und die zweite Gummi-Schicht jeweils in einem eigenen Vulkanisierungsschritt vulkanisiert und weisen somit eine unterschiedliche Vulkanisierungshistorie auf,
Vorzugsweise weist die erste Gummi-Schicht einen anderen, insbesondere einen höheren, Vulkanisierungsgrad auf als der Vulkanisierungsgrad der zweiten Gummi-Schicht, die der Basis zugeordnet ist. Die unterschiedlichen Vulkanisierungsgrade dienen dabei der optimalen Anpassung der Gummi-Schichten an die ihnen zugeordneten Bauteile. In einer weiteren Weiterbildung weist die erste Gummi-Schicht den gleichen Vulkanisierungsgrad auf wie die zweite Gummi-Schicht. In dieser Weiterbildung sind die erste und die zweite Gummi-Schicht optimal miteinander vernetzt.

Es hat sich als besonders vorteilhaft erwiesen, wenn die erste Gummi-Schicht direkt angebunden an die Oberflächenfolie und die zweite Gummi-Schicht direkt angebunden an die Basis ist. In einer weiteren Weiterbildung kann die Anbindungsschicht zwischen der ersten Gummi-Schicht und der zweiten Gummi-Schicht eine weitere Verbindungsschicht enthalten. Diese Verbindungsschicht kann vorteilhaft einer verbesserten Anbindung der ersten Gummi-Schicht an die zweite Gummi-Schicht dienen. Die erste Gummi-Schicht kann aber auch direkt an die zweite Gummi-Schicht angebunden sein.

Vorzugsweise weist die erste und/oder die zweite Gummi-Schicht Ethylen-Propylen-Dien-Kautschuk (EPDM) auf. EPDM eignet sich gut für die Anbindung an UHMWPE, zudem verfügt es über eine hervorragende Hitze-, Ozon- und UV-Beständigkeit. EPDM ist darüber hinaus flexibel und elastisch, sodass in Verbindung des EPDM mit dem UHMWPE die Robustheit des UHMWPE mit den Dämpfungseigenschaften des EPDM kombiniert werden kann. Auch bei niedrigen Temperaturen ist EPDM hoch flexibel. Die erste und/oder die zweite Gummi-Schicht weist in einer weiteren Weiterbildung zusätzliche UV-Stabilisatoren auf.

Vorzugsweise ist das härtbare Harz ein Reaktionsharz, insbesondere bevorzugt ein Epoxidharz. Epoxidharze eignen sich besonders gut für den Einsatz in Faserverbundmaterialien. Ein bevorzugtes Fasermaterial sind Glasfasern und/oder Kohlefasern. Neben dem Fasermaterial kann das Rotorblattelement auch weitere Kernwerkstoffe als Strukturkörper enthalten, beispielsweise Birken- und/oder Balsaelemente und/oder Schaumstoffkörper. Ein Vorteil solcher Fasermaterialien enthaltenden Rotorblattelemente oder Rotorblätter ist ihre Stabilität bei geringem Gewicht. Ebenfalls vorteilhaft ist ihre gute Formbarkeit, bevor das Harz ausgehärtet ist.

Vorzugsweise geschieht eine Anbindung der ersten Gummi-Schicht an die Oberflächenfolie durch mechanische Adhäsion und eine Anbindung der zweiten Gummi-Schicht an die Basis durch Vernetzungsreaktionen. In bevorzugten Weiterbildungen ist das Rotorblattelement ein Steg, ein Rotorblattaußenschale und deren Teile, insbesondere eine Halbschale der Druckseite oder Saugseite, eine Rotorblattvorderkante, eine Rotorblatthinterkante, eine Rotorblattspitze oder eine Rotorblattnase.

Für Windenergieanlagen ist es besonders vorteilhaft, dass UHMWPE-Folien färbbar sind, sodass beispielsweise Signalmarkierungen, wie sie aus Gründen der Flugsicherheit erforderlich sind, aufgebracht werden können. Eingefärbte Oberflächenfolien sind vorzugsweise eingefärbt in einer oder mehreren der Farben nach achatgrau RAL 7038, verkehrsrot RAL 3020, verkehrsorange RAL 2009, verkehrsweiß RAL 9016 und feuerrot RAL 3000.

Des Weiteren ist es vorteilhaft, wenn UHMWPE-Folien eingesetzt werden, die zusätzlich UV-stabilisiert sind. Diese Folien verfügen über eine verbesserte Stabilität unter Außenbedingungen.

Ein Herstellungsverfahren gemäß dem Konzept der Erfindung teilt die Vorteile der zuvor beschriebenen Vorrichtung.

Insbesondere ist es vorteilhaft, wenn im Rahmen des Herstellungsverfahrens die zweite Kautschukschicht auf dem Verbund aufgebracht wird und der Verbund anschließend mit der zweiten Kautschukschicht auf die Basis aufgebracht wird. Dies ermöglicht eine gute Anbindung von Verbund und Basis. Aber auch das Aufbringen der zweiten Kautschukschicht nur auf der Basis oder von Material der zweiten Kautschukschicht sowohl auf der Basis als auch auf dem Verbund kann vorteilhaft sein.

Vorzugsweise findet die Vulkanisierung der ersten Kautschukschicht bei höheren Temperaturen und/oder höheren Drücken statt als die Vulkanisierung der zweiten Kautschukschicht. Mit einem derartigen Verfahren wird insbesondere der thermischen Belastbarkeit von Epoxidharz Rechnung getragen. So ist es beim Ausvulkanisieren der zweiten Kautschukschicht möglich, diese beispielsweise nur teilzuvulkanisieren bei geringen Temperaturen und/oder geringen Drücken, was trotzdem zu einer guten Anbindung an die erste Gummi-Schicht und das Harz der Basis führt, während gleichzeitig das Harz thermisch nicht über Gebühr beansprucht wird. Aber auch eine Vulkanisierung der zweiten Kautschukschicht bis zum Vulkanisierungsgrad der ersten Gummi-Schicht, beispielsweise mit längeren Vulkanisierungszeiten bei niedrigeren Temperaturen als bei der Vulkanisierung der ersten Kautschukschicht, liegt im Rahmen der Erfindung.

Des Weiteren ist es vorteilhaft, wenn die Härtung des Harzes und das Vulkanisieren der zweiten Kautschukschicht in einem Schritt erfolgen. Kombiniert man beide Prozesse in einem Schritt, so können die zweite Gummi-Schicht und das Harz besser vernetzen.

Insbesondere ist ein Verfahren vorteilhaft, bei dem die Anbindung der ersten Gummi-Schicht an die Oberflächenfolie über mechanische Adhäsion erfolgt, und bei dem die Anbindung der zweiten Gummi-Schicht an die Basis über Vernetzungsreaktionen erfolgt.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus mindestens zwei der in der Beschreibung, der Zeichnung und/oder den Ansprüchen offenbarten Merkmale.

Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1: eine schematische Darstellung einer Windenergieanlage mit Rotorblättern gemäß der Erfindung;
- Fig. 2: schematisch eine Ausführungsform einer Rotorblattnase als Rotorblattelement gemäß der Erfindung;
- Fig. 3: in schematischer Darstellung einen Ausschnitt des Rotorblattelementes aus Fig. 2;
- Fig. 4: eine schematische Darstellung einer Ausführungsform eines Herstellungsverfahrens gemäß dem Konzept der Erfindung.

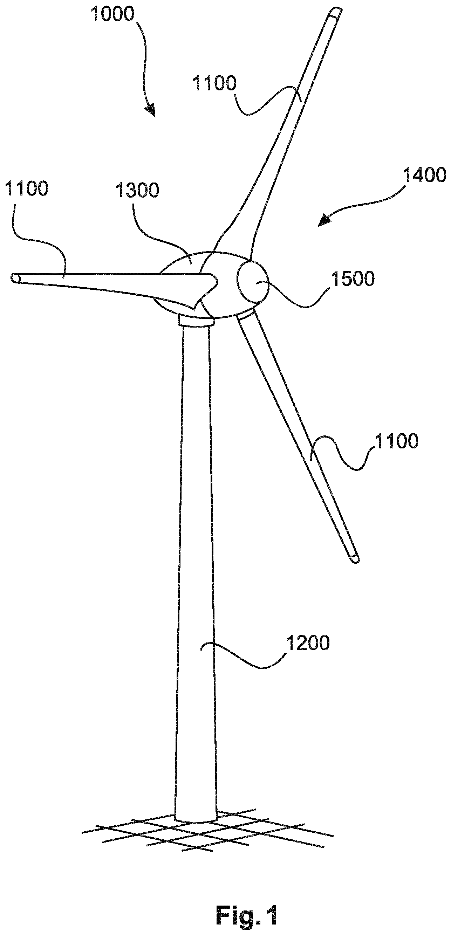

Fig. 1 zeigt eine Windenergieanlage 1000 mit einem Turm 1200 und einer Gondel 1300. An der Gondel 1300 ist ein Rotor 1400 mit drei Rotorblättern 1100 und einem Spinner 1500 angeordnet. Der Rotor 1400 wird im Betrieb durch den Wind in eine Drehbewegung versetzt und treibt dadurch einen Generator in der Gondel 1300 an. Die Rotorblätter 1100 der Windenergieanlage 1000 verfügen über eine Basis aus Fasermaterial getränkt mit härtbarem Harz und sind stellenweise mit einer Oberflächenfolie aus UHMWPE beschichtet, wobei sich zwischen der Oberflächenfolie und der Basis eine Anbindungsschicht befindet, die ihrerseits eine erste und eine zweite Gummischicht aufweist. Die erste Gummischicht weist dabei einen anderen Vulkanisierungsgrad auf als die zweite Gummischicht. Dieser Aufbau wird anhand der folgenden Figuren näher erläutert.

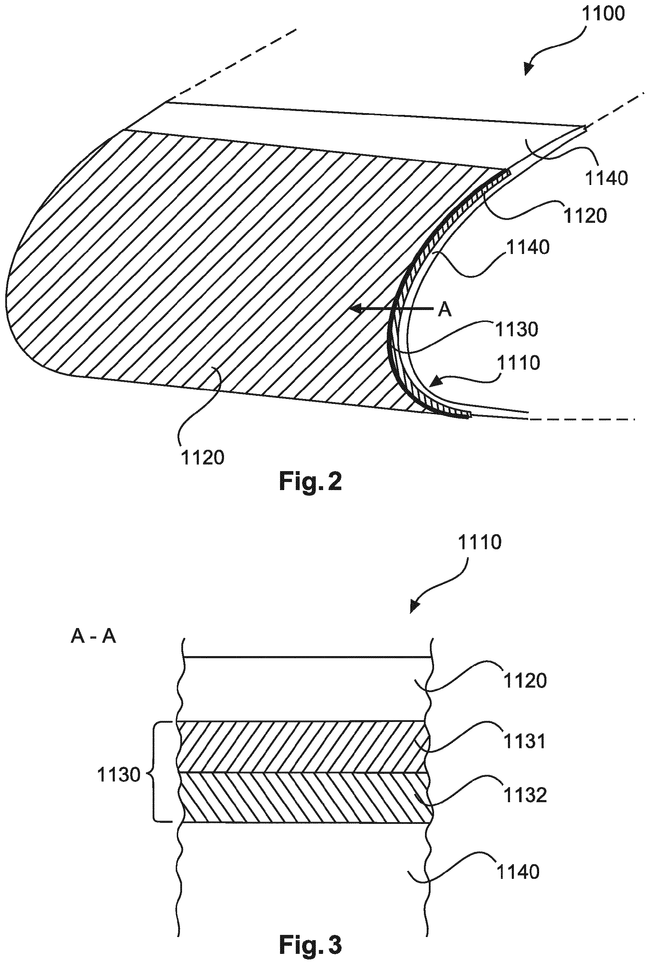

Fig. 2 zeigt eine Rotorblattelement 1110 des Rotorblattes 1100, nämlich die Rotorblattnase. Die Rotorblattnase 1110 verfügt über eine Oberflächenfolie 1120. Diese besteht in diesem Ausführungsbeispiel aus Polyethylen mit ultrahohem Molekulargewicht (UHMWPE). Die Oberflächenfolie 1120 ist über eine Anbindungsschicht 1130 mit der Basis des Rotorblattelementes 1140 verbunden. Die Basis 1140 des Rotorblattelementes besteht dabei aus einem Fasermaterial getränkt mit härtbarem Harz. Im Ausführungsbeispiel ist das Fasermaterial glasfaserverstärkter Kunststoff (GFK) und das härtbare Harz ein Epoxidharz. Die Anbindungsschicht 1130 weist eine erste Gummischicht sowie eine zweite Gummischicht auf, die über unterschiedliche Vulkanisierungsgrade verfügen. Durch die Anbindung der Oberflächenfolie 1120 an die Basis 1140 mittels einer elastischen Anbindungsschicht mit mehreren Gummischichten ist zum einen das Fügen von UHMWPE auf Epoxidharz möglich. Zum anderen hat die Anbindungsschicht dämpfende Eigenschaften, was insbesondere bei Belastungen der Oberflächenfolie und der Rotorbasis vorteilhaft ist. Die Oberflächenfolie 1120 aus UHMWPE ist besonders widerstandsfähig gegen abrasive Belastungen wie sie beim Betrieb von Windenergieanlagen insbesondere an den Rotorkanten auftritt. Der in diesem Ausführungsbeispiel in der ersten und zweiten Gummi-Schicht verwendete Gummi ist vulkanisierter EPDM-Kautschuk.

Fig. 3 zeigt einen Ausschnitt des Rotorblattelementes 1110. An dieser Stelle des Rotorblattelementes 1110 verfügt das Rotorblattelement 1110 über folgenden Schichtaufbau: Zunächst eine Basis 1140, auf der Basis die Anbindungsschicht 1130 bestehend aus der ersten Gummischicht 1131 und der zweiten Gummischicht 1132. Dabei ist die zweite Gummischicht 1132 direkt auf der Basis 1140 angeordnet und mit dieser vorzugsweise über Vernetzungsreaktionen verbunden. Die erste Gummischicht 1131 ist auf der zweiten Gummischicht 1132 angeordnet. Die erste Gummischicht 1131 verfügt im gezeigten Ausführungsbeispiel über einen höheren Vulkanisierungsgrad als die zweite Gummi-Gummischicht 1132. Auf der ersten Gummischicht 1131 ist die Oberflächenfolie 1120 aus UHMWPE direkt angeordnet. Die Oberflächenfolie 1120 haftet an der ersten Gummischicht 1131 über mechanische Adhäsion. Der gezeigte Schichtaufbau ermöglicht die beständige Anbindung von UHMWPE an die Basis eines Rotorblattes oder eines Rotorblattelementes aus mit Epoxidharz getränktem Fasermaterial und verbindet gleichzeitig die Dämpfungseigenschaften der Gummischichten der Anbindungsschicht mit der Abriebfestigkeit und damit dem Erosionsschutz der UHMWPE-Folie.

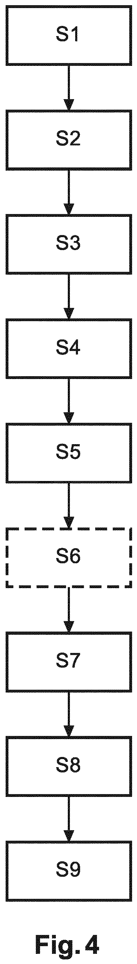

Fig. 4 zeigt schematisch ein Herstellungsverfahren für ein Rotorblattelement gemäß dem Konzept der Erfindung. In Schritt S1 wird eine Oberflächenfolie, welche UHMWPE aufweist, bereitgestellt. In Schritt S2 wird ein Verbund aus der Oberflächenfolie und einer Kautschukschicht hergestellt, indem die Kautschukschicht auf eine Seite der Oberflächenfolie aufgebracht wird. Das Aufbringen kann in einer Ausführungsform des Verfahrens durch Walzen der Kautschukschicht auf die Oberflächenfolie geschehen. Es ist aber auch möglich, den Kautschuk aufzustreichen. In Schritt S3 wird die Kautschukschicht zu einer ersten Gummischicht vulkanisiert. In einer bevorzugten Ausführungsform handelt es sich bei dem Kautschuk um EPDM. Die Vulkanisation kann beispielsweise über eine Schwefelvulkanisation, aber insbesondere im Fall von EPDM auch mit Peroxiden geschehen. Geeignete Vulkanisierungstemperaturen liegen zwischen 100 °C und 180 °C, insbesondere 140 °C bis 150 °C. Geeignete Drücke für die Herstellung des Verbundes aus UHMWPE-Folie und EPDM liegen bei ca. 8 bar.

In Schritt S4 wird ein Fasermaterial für eine Basis des Rotorblattelementes bereitgestellt. Vorzugsweise ist das Fasermaterial ein glasfaserverstärkter Kunststoff. Anschließend wird in Schritt S5 die Basis durch Tränken des Fasermaterials mit einem härtbaren Harz, vorzugsweise Epoxidharz, hergestellt. In Schritt S6 kann optional gleich im Anschluss das härtbare Harz gehärtet werden. Die Härtung des Harzes kann aber auch später im Verfahren erfolgen. In Schritt S7 wird eine zweite Kautschukschicht aufgebracht. Hierbei wird das Material der zweiten Kautschukschicht entweder auf der Basis oder auf dem Verbund oder in einer weiteren Ausführungsform auch in Teilen auf der Basis und in Teilen auf dem Verbund aufgebracht. In Schritt S8 wird der Verbund derart auf die Basis aufgebracht, dass die zweite Kautschukschicht sich zwischen Basis und Verbund befindet. In Schritt S9 wird die zweite Kautschukschicht zu einer zweiten Gummischicht vulkanisiert und damit eine dauerhafte Anbindung der Basis an den Verbund und somit an die Oberflächenfolie geschaffen. Das Vulkanisieren der zweiten Kautschukschicht findet vorteilhafterweise bei 50 °C und 2 bar statt. Ebenso wie die erste Kautschukschicht weist die zweite Kautschukschicht vorteilhafterweise EPDM auf. EPDM ist an UHMWPE als auch zur Anbindung an Epoxidharz gut geeignet. Gleichzeitig mit der Vulkanisierung der zweiten Kautschukschicht zur zweiten Gummischicht kann auch die Härtung des härtbaren Harzes erfolgen.

## Patentansprüche

1. Rotorblattelement, insbesondere eine Rotorblattkante, für eine Windenergieanlage, mit einer Basis aufweisend ein Fasermaterial getränkt mit härtbarem Harz und einer Oberflächenfolie mit einer zwischen Basis und Oberflächenfolie angeordneten Anbindungsschicht, wobei
die Oberflächenfolie Polyethylen mit ultrahohem Molekulargewicht (UHMWPE) aufweist und die Anbindungsschicht eine erste Gummi-Schicht und eine zweite Gummi-Schicht aufweist, wobei die erste Gummi-Schicht der Oberflächenfolie zugeordnet ist und die zweite Gummi-Schicht der Basis zugeordnet ist, **dadurch gekennzeichnet, dass**
die erste Gummi-Schicht ein erstes Gummi eines ersten vulkanisierten Kautschuks und die zweite Gummi-Schicht ein zweites Gummi eines zweiten vulkanisierten Kautschuks enthält, wobei
ein Vulkanisierungsgrad der ersten Gummi-Schicht höher ist als ein Vulkanisierungsgrad der zweiten Gummi-Schicht.

2. Rotorblattelement nach Anspruch 1, bei dem die erste Gummi-Schicht direkt angebunden ist an die Oberflächenfolie und die zweite Gummi-Schicht direkt angebunden ist an die Basis.

3. Rotorblattelement nach einem der vorstehenden Ansprüche, bei dem die erste und/oder zweite Gummi-Schicht Ethylen-Propylen-Dien-Kautschuk (EPDM) aufweist.

4. Rotorblattelement nach einem der vorstehenden Ansprüche, bei dem das härtbare Harz ein Reaktionsharz, vorzugsweise ein Epoxidharz ist.

5. Rotorblattelement nach einem der vorstehenden Ansprüche, **gekennzeichnet durch** eine Anbindung der ersten Gummi-Schicht an die Oberflächenfolie durch mechanische Adhäsion und eine Anbindung der zweiten Gummi-Schicht an die Basis durch Vernetzung.

6. Rotorblattelement nach einem der vorstehenden Ansprüche, wobei das Rotorblattelement ausgewählt ist aus der Gruppe bestehend aus: einem Steg, einer Rotorblattaußenschale und deren Teile, insbesondere einer Halbschale der Druckseite oder der Saugseite, einer Rotorblatthinterkante, einer Rotorblattspitze, einer Rotorblattnase.

7. Rotorblatt mit einem Rotorblattelement nach einem der vorstehenden Ansprüche.

8. Windenergieanlage mit einem Rotorblatt oder Rotorblattelement nach einem der vorstehenden Ansprüche.

9. Verfahren zur Herstellung eines Rotorblatts oder Rotorblattelementes nach einem der vorstehenden Ansprüche, umfassend die Schritte:
-
a) Bereitstellen einer Oberflächenfolie aufweisend UHMWPE
b) Herstellen eines Verbundes durch Aufbringen einer ersten Kautschukschicht auf einer Seite der Oberflächenfolie
c) Vulkanisieren der ersten Kautschukschicht zu einer ersten Gummi-Schicht
-
d) Bereitstellen eines Fasermaterials
e) Herstellen einer Basis durch Tränken des Fasermaterials mit einem härtbaren Harz
f) Härtung des härtbaren Harzes
g) Aufbringen einer zweiten Kautschukschicht auf der Basis und/oder auf dem Verbund
h) Aufbringen des Verbundes auf die Basis, derart, dass die zweite Kautschukschicht sich zwischen Basis und Verbund befindet
i) Vulkanisieren der zweiten Kautschukschicht zu einer zweiten Gummi-Schicht, wobei
- das Vulkanisieren der ersten Kautschukschicht bei höheren Temperaturen und/oder höheren Drücken stattfindet als das Vulkanisieren der zweiten Kautschukschicht, und ein Vulkanisierungsgrad der ersten Gummi-Schicht höher ist als ein Vulkanisierungsgrad der zweiten Gummi-Schicht.

10. Verfahren nach einem der Ansprüche 9, bei dem die Härtung des Harzes und das Vulkanisieren der zweiten Kautschukschicht in einem Schritt erfolgen.

11. Verfahren nach einem der Ansprüche 9 oder 10, bei dem die Anbindung der ersten Gummi-Schicht an die Oberflächenfolie über mechanische Adhäsion erfolgt und bei dem die Anbindung der zweiten Gummi-Schicht an die Basis über Vernetzungsreaktionen erfolgt.

## Claims

1. Rotor blade element, in particular a rotor blade edge, for a wind turbine, having a base having a fibre material impregnated with hardenable resin and a surface film having a connection layer which is arranged between the base and surface film, wherein
the surface film has polyethylene with ultrahigh molecular weight (UHMWPE) and the connection layer has a first rubber layer and a second rubber layer, wherein the first rubber layer is associated with the surface film and the second rubber layer is associated with the base, **characterised in that**
the first rubber layer contains a first rubber of a first vulcanised caoutchouc and the second rubber layer contains a second rubber of a second vulcanised caoutchouc, wherein
a vulcanisation degree of the first rubber layer is higher than a vulcanisation degree of the second rubber layer.

2. Rotor blade element according to claim 1, wherein the first rubber layer is directly connected to the surface film and the second rubber layer is directly connected to the base.

3. Rotor blade element according to either of the preceding claims, wherein the first and/or second rubber layer has/have ethylene-propylene-diene-monomer rubber (EPDM).

4. Rotor blade element according to any one of the preceding claims, wherein the hardenable resin is a reaction resin, preferably an epoxy resin.

5. Rotor blade element according to any one of the preceding claims, **characterised by** a connection of the first rubber layer to the surface film by means of mechanical adhesion and a connection of the second rubber layer to the base by means of cross-linking.

6. Rotor blade element according to any one of the preceding claims, wherein the rotor blade element is selected from the group comprising: a web, a rotor blade outer shell and the components thereof, in particular a half-shell of the pressure side or the intake side, a rotor blade rear edge, a rotor blade tip, a rotor blade nose.

7. Rotor blade having a rotor blade element according to any one of the preceding claims.

8. Wind turbine having a rotor blade or rotor blade element according to any one of the preceding claims.

9. Method for producing a rotor blade or rotor blade element according to any one of the preceding claims, comprising the steps of:
-
a) providing a surface film having UHMWPE
b) producing a composite by applying a first caoutchouc layer to one side of the surface film,
c) vulcanising the first caoutchouc layer to form a first rubber layer,
-
d) providing a fibre material
e) producing a base by impregnating the fibre material with a hardenable resin,
f) hardening the hardenable resin,
g) applying a second caoutchouc layer to the base and/or to the composite,
h) applying the composite to the base in such a manner that the second caoutchouc layer is located between the base and the composite,
i) vulcanising the second caoutchouc layer to form a second rubber layer, wherein
- the vulcanisation of the first caoutchouc layer is carried out at higher temperatures and/or higher pressures than the vulcanisation of the second caoutchouc layer and a degree of vulcanisation of the first rubber layer is higher than a degree of vulcanisation of the second rubber layer.

10. Method according to claim 9, wherein the hardening of the resin and the vulcanisation of the second caoutchouc layer are carried out in one step.

11. Method according to either claim 9 or claim 10, wherein the connection of the first rubber layer to the surface film is carried out by means of mechanical adhesion and wherein the connection of the second rubber layer to the base is carried out by means of cross-linking reactions.

## Revendications

1. Elément de pale de rotor, en particulier bord de pale de rotor, pour une éolienne, avec une base présentant un matériau fibreux imprégné de résine durcissable et un film superficiel, avec une couche de liaison disposée entre la base et le film superficiel, dans lequel
le film superficiel présente du polyéthylène à ultra-haut poids moléculaire (UHMWPE) et la couche de liaison présente une première couche de gomme et une deuxième couche de gomme, dans lequel la première couche de gomme est associée au film superficiel et la deuxième couche de gomme est associée à la base, **caractérisé en ce que**
la première couche de gomme contient une première gomme d'un premier caoutchouc vulcanisé et la deuxième couche de gomme contient une deuxième gomme d'un deuxième caoutchouc vulcanisé, dans lequel
un degré de vulcanisation de la première couche de gomme est supérieur à un degré de vulcanisation de la deuxième couche de gomme.

2. Elément de pale de rotor selon la revendication 1, où la première couche de gomme est directement reliée au film superficiel et la deuxième couche de gomme est directement reliée à la base.

3. Elément de pale de rotor selon l'une quelconque des revendications précédentes, où la première et/ou deuxième couche de gomme présente du caoutchouc éthylène-propylène-diène (EPDM).

4. Elément de pale de rotor selon l'une quelconque des revendications précédentes, où la résine durcissable est une résine de réaction, de préférence une résine époxyde.

5. Elément de pale de rotor selon l'une quelconque des revendications précédentes, **caractérisé par** une liaison de la première couche de gomme au film superficiel par adhérence mécanique et une liaison de la deuxième couche de gomme à la base par réticulation.

6. Elément de pale de rotor selon l'une quelconque des revendications précédentes, dans lequel l'élément de pale de rotor est sélectionné dans le groupe constitué : d'un élément de garniture, d'une coque extérieure de pale de rotor et des parties de celle-ci, en particulier d'une demi-coque du côté pression ou du côté aspiration, d'un bord arrière de pale de rotor, d'un bout de pale de rotor, d'un nez de pale de rotor.

7. Pale de rotor avec un élément de pale de rotor selon l'une quelconque des revendications précédentes.

8. Eolienne avec une pale de rotor ou un élément de pale de rotor selon l'une quelconque des revendications précédentes.

9. Procédé de fabrication d'une pale de rotor ou d'un élément de pale de rotor selon l'une quelconque des revendications précédentes, comprenant les étapes :
-
a) de fourniture d'un film superficiel présentant UHMWPE
b) de fabrication d'un composite par application d'une première couche de caoutchouc sur une face du film superficiel
c) de vulcanisation de la première couche de caoutchouc en une première couche de gomme
-
d) de fourniture d'un matériau fibreux
e) de fabrication d'une base par imprégnation du matériau fibreux d'une résine durcissable
f) de durcissement de la résine durcissable
g) d'application d'une deuxième couche de caoutchouc sur la base et/ou sur le composite
h) d'application du composite sur la base, de telle sorte que la deuxième couche de caoutchouc se trouve entre la base et le composite
i) de vulcanisation de la deuxième couche de caoutchouc en une deuxième couche de gomme, dans lequel
- la vulcanisation de la première couche de caoutchouc a lieu à des températures plus élevées et/ou pressions plus élevées que la vulcanisation de la deuxième couche de caoutchouc, et un degré de vulcanisation de la première couche de gomme est supérieur à un degré de vulcanisation de la deuxième couche de gomme.

10. Procédé selon l'une quelconque des revendications 9, où le durcissement de la résine et la vulcanisation de la deuxième couche de caoutchouc s'effectuent en une étape.

11. Procédé selon l'une quelconque des revendications 9 ou 10, où la liaison de la première couche de gomme au film superficiel s'effectue par l'intermédiaire d'une adhérence mécanique et où la liaison de la deuxième couche de gomme à la base s'effectue par l'intermédiaire de réactions de réticulation.
